(19) Europäisches Patentamt
European Patent Office
Office européen des brevets

(11) EP 2 210 906 B1

(12) **EUROPÄISCHE PATENTSCHRIFT**

(45) Veröffentlichungstag und Bekanntmachung des Hinweises auf die Patenterteilung:
**09.05.2012 Patentblatt 2012/19**

(51) Int Cl.:
***C08F 220/18*** *(2006.01)* ***C09J 133/08*** *(2006.01)*

(21) Anmeldenummer: **10150646.7**

(22) Anmeldetag: **13.01.2010**

(54) **Haftklebebänder für elektronische Anwendungen**

Adhesive tapes for electronic applications

Bandes adhésives pour applications électroniques

(84) Benannte Vertragsstaaten:
**AT BE BG CH CY CZ DE DK EE ES FI FR GB GR HR HU IE IS IT LI LT LU LV MC MK MT NL NO PL PT RO SE SI SK SM TR**

(30) Priorität: **27.01.2009 DE 102009006232**

(43) Veröffentlichungstag der Anmeldung:
**28.07.2010 Patentblatt 2010/30**

(73) Patentinhaber: **tesa SE**
**20253 Hamburg (DE)**

(72) Erfinder:
- **Husemann, Marc**
**22559 Hamburg (DE)**
- **Zöllner, Stephan, Dr.**
**21244 Buchholz /Nordheide (DE)**

(56) Entgegenhaltungen:
**EP-A1- 1 978 069 DE-A1-102004 044 086**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

EP 2 210 906 B1

## Beschreibung

Die Erfindung eine Haftklebemassenzusammensetzung sowie deren Verwendung für ein- oder doppelseitige Haftklebebänder für elektronische Anwendungen. Die Haftklebemasse und die Haftklebebänder sind gekennzeichnet durch sehr gute EMI-Shielding-Eigenschaften.

Haftklebebänder sind im Zeitalter der Industrialisierung weitverbreitete Verarbeitungshilfsmittel. Insbesondere für den Einsatz in elektronischen Bauteilen werden an Haftklebebänder sehr hohe Anforderungen gestellt. Die bekanntesten elektronischen Defekte sind Störungen, die durch elektromagnetische Interferenz (EMI) verursacht werden. Elektromagnetische Interferenz wird von jedem elektronischen System erzeugt und kann die Funktionsweise in der Nähe liegender Systeme stören. Neben einem geringen Ausgasungsverhalten sollten die Haftklebebänder in einem weiten Temperaturbereich einsetzbar sein und ein gutes Abschirmverhalten gegenüber elektromagnetischer Resonanz (Fachbegriff für die Abschirmung elektromagnetischer Resonanz: "EMI Shielding") aufweisen. Da die elektromagnetische Interferenz durch elektromagnetische Strahlung (EMR) bewirkt wird, geht die vorstehende Anforderung einher mit einem guten Abschirmverhalten gegenüber elektromagnetischer Strahlung allgemein. Diese Anforderung wird durch die immer stärker verbreitete Minituarisierung verstärkt. Die elektronischen Komponenten in elektronischen Bauteilen rücken immer näher zusammen und müssen daher gegenseitig vor elektromagnetischer Strahlung und elektromagnetischer Interferenz geschützt werden. Des Weiteren werden elektronische Geräte, wie z.B. Mobiltelefone, immer häufiger und intensiver von Menschen genutzt, so dass man auch hier - insbesondere auch aus gesundheitlichen Überlegungen - die Einwirkung der elektromagnetischen Strahlung, die aus dem Gerät austritt, minimieren möchte. Weiterhin ist es bei der Herstellung von elektronischen Geräten häufig gewünscht, dass die einzusetzenden doppelseitigen Haftklebebänder eine Doppelfunktion aus Schutz vor elektromagnetischer Strahlung und Haftung zwischen den einzelnen Bauteilen übernehmen.

Klebebänder mit Abschirmungsverhalten bezüglich elektromagnetischer Strahlung und Interferenz (im folgenden zusammenfassend als EMI-Shielding-Eigenschaften bezeichnet) sind bereits bekannt. So werden die EMI-Shielding-Eigenschaften im Stand der Technik beispielsweise durch Einsatz von Aluminium- oder Kupferträgerfolien bei Haftklebebändern erreicht. Aber auch Polyester/Aluminium-Laminate oder Gold- sowie Silber-bedampfte Gewebe können als Trägermaterialien können eingesetzt werden. Die Trägermaterialien werden zudem mit elektrisch leitfähigen Klebemassen kombiniert, um die gewünschten Eigenschaften zu erreichen.

Weiterhin ist die Wirkung von Carbonyleisen für EMI-Shielding bekannt. So wird seine typische Eigenschaft z.B. in US 7,135,643 beschrieben. In der genannten Schrift sind auch Haftklebemassen beschrieben, die aber selbst keine EMI-Shielding-Eigenschaften aufweisen, sondern nur zur Verklebung der EMI-Shielding-Materialien eingesetzt werden. Des Weiteren wird Carbonyleisen auch als Füllerstoff sehr variabel eingesetzt. Nichthaftklebrige Beschichtungen sind z.B. in US 5,645,886 beschrieben. Es sind aber auch metallurgische Anwendungen, Anwendungen in Toner oder die Additivierung als hartmachende Komponenten bekannt.

Die Dokumente EP1978069 und DE102004044086 betreffen Haftklebemassen, wobei Eisen Oxid zugesetzt wird. Carbonyleisen sind nicht offenbart.

Dagegen wurde Carbonyleisen bisher noch nicht als Additiv in Haftklebemassen eingesetzt, da zu erwarten war, dass die Partikel zu hart für Haftklebemassen sind und zu hohe Füllgrade erfordern.

Aufgabe der Erfindung ist es daher, ein- und doppelseitige Haftklebebänder zur Verfügung zu stellen, die EMI-Shielding-Eigenschaften aufweisen, ohne dass die Klebebänder hierfür mit einem metallischen Trägermaterial ausgerüstet werden müssen.

Gelöst werden konnte die Aufgabe, indem Haftklebemassen in nicht katalytischen Mengen mit Carbonyleisen versetzt wurden. Im Rahmen dieser Erfindung wurde überraschend gefunden, dass Haftklebemassen nach Zugabe relativ hoher Gewichtsanteile Carbonyleisen EMI-Shielding-Eigenschaften und auch noch haftklebrige Eigenschaften aufweisen können.

Der Hauptanspruch betrifft somit Haftklebemassen mit einer Beimischung von mindestens 30 pph Carbonyleisen und einer Glasübergangstemperatur $T_G$ der Basispolymermischung über -30°C. Die Haftklebemassen enthalten sehr bevorzugt mindestens 35 pph Carbonyleisen. Bevorzugt sind der Haftklebemasse nicht mehr als 60 pph Carbonyleisen zugesetzt. pph: parts per hundred; jeweils bezogen auf die Gesamtheit der Basispolymere (30 pph Carbonyleisen bedeutet dementsprechend 30 Gewichtsteile Carbonyleisen auf 100 Gewichtsteile Basispolymer).

Gegenstand der Erfindung sind weiterhin Weiterentwicklungen der erfindungsgemäßen Haftklebemasse, ein- oder doppelseitige Haftklebebänder, die mit mindestens einer Schicht der erfindungsgemäßen Haftklebemasse ausgerüstet sind, sowie die Verwendung der erfindungsgemäßen Haftklebemassen oder Haftklebebänder zur Verklebung elektronischer Bauteile.

Als Haftklebemassen werden in der vorliegenden Schrift solche polymeren Massen bezeichnet, die bei Raumtemperatur und/oder bei Temperaturen oberhalb der Raumtemperatur haftklebrige Eigenschaften aufweisen.

Als Haftklebemassensysteme für die erfindungsgemäßen ein- und doppelseitigen Haftklebebänder werden bevorzugt Acrylat-, Naturkautschuk-, Synthesekautschuk-, Silikon- oder EVA-Kleber eingesetzt, insbesondere von Vorteil sind aus dieser Gruppe die Acrylathaftklebemassen. Natürlich Gemäß der erfindungsgemäßen Lehre lassen sich

aber auch die weiteren dem Fachmann bekannten Haftklebemassen, wie sie z.B im "Handbook of Pressure Sensitive Adhesive Technology" von Donatas Satas (van Nostrand, New York 1989) aufgeführt sind, zur Erzielung von EMI-Shielding-Eigenschaften additivieren.

Die Monomere zur Herstellung der Polymere, auf denen die Haftklebemassen basieren, werden besonders bevorzugt dermaßen gewählt, dass die resultierenden Polymere bei Raumtemperatur als Haftklebemassen eingesetzt werden können.

Haftklebemassen (PSA; englisch: "pressure sensitive adhesives") sind insbesondere solche polymeren Massen, die - gegebenenfalls durch geeignete Additivierung mit weiteren Komponenten, wie beispielsweise Klebharzen - bei der Anwendungstemperatur (sofern nicht anders definiert, bei Raumtemperatur) dauerhaft klebrig und permanent klebfähig sind und an einer Vielzahl von Oberflächen bei Kontakt anhaften, insbesondere sofort anhaften (einen so genannten "Tack" [Klebrigkeit oder Anfassklebrigkeit] aufweisen). Sie sind in der Lage, bereits bei der Anwendungstemperatur ohne eine Aktivierung durch Lösemittel oder durch Wärme - üblicherweise aber durch den Einfluss eines mehr oder weniger hohen Druckes - ein zu verklebenden Substrat hinreichend zu benetzen, damit sich zwischen der Masse und dem Substrat für die Haftung hinreichende Wechselwirkungen ausbilden können. Hierfür wesentliche Einflussparameter sind unter anderem der Druck sowie die Kontaktzeit. Die besonderen Eigenschaften der Haftklebemassen gehen unter anderem insbesondere auf deren viskoelastische Eigenschaften zurück.

Haftklebemassen können grundsätzlich auf Grundlage von Polymeren unterschiedlicher chemischer Natur hergestellt werden. Die haftklebenden Eigenschaften werden unter anderem durch die Art und die Mengenverhältnisse der eingesetzten Monomere bei der Polymerisation der der Haftklebemasse zugrunde liegenden Polymere, deren mittlere Molmasse und Molmassenverteilung sowie durch Art und Menge der Zusatzstoffe der Haftklebemasse, wie Klebharze, Weichmacher und dergleichen, beeinflusst.

Zur Erzielung der viskoelastischen Eigenschaften werden die Monomere, auf denen die der Haftklebemasse zugrunde liegenden Polymere basieren, sowie die gegebenenfalls vorhandenen weiteren Komponenten der Haftklebemasse insbesondere derart gewählt, dass die Haftklebemasse eine Glasübergangstemperatur (DSC-Messung; sofern nicht anders definiert sind im Rahmen dieser Schrift Glasübergangstemperaturen nach DIN 53765 gemeint) unterhalb der Anwendungstemperatur (also üblicherweise unterhalb der Raumtemperatur) aufweisen, so liegt die Glasübergangstemperatur für viele bei Raumtemperatur haftklebrige Polymermischungen zwischen - 50 °C und + 10 °C. Die Masse wird üblicherweise geeigneten kohäsionssteigernden Maßnahmen, wie beispielsweise Vernetzungsreaktionen (Ausbildung brückenbildender Verknüpfungen zwischen den Makromolekülen der Basispolymere), unterzogen.

Der Anwendungsbereich der Haftklebemassen kann somit durch eine Einstellung zwischen Fließfähigkeit und Kohäsion der Masse optimiert werden.

Die erfindungsgemäßen Haftklebemassen umfassen eines oder mehrere Polymere mit einem gewichtsmittleren Molekulargewicht von mindestens 100.000 g/mol (im folgenden als Basispolymere bezeichnet), sehr bevorzugt einen oder mehrere Vernetzer, gegebenenfalls ein oder mehrere Beimischungen, wie insbesondere Polymere niedriger gewichtsmittlerer Molekulargewichte insbesondere bis 10.000 g/mol, wie beispielsweise Klebharze, sowie das erfindungsgemäß eingesetzte Carbonyleisen.

Alle Molekulargewichtsangaben im Rahmen dieser Schrift beziehen sich auf die Bestimmung mittels Größenausschlusschromatographie (GPC).

Zur Erzielung der haftklebrigen Eigenschaften sollte das Basispolymer eine Glasübergangstemperatur $T_G \leq$ - 30 °C aufweisen, bzw., sofern mehrere Basispolymere vorhanden sind, die Basispolymermischung eine Glasübergangstemperatur $T_G \leq$ - 30 °C aufweisen, bestimmt nach der Gleichung G1 (in Analogie zur Fox-Gleichung; vgl. T.G. Fox, Bull. Am. Phys. Soc. 1 (1956) 123).

$$\frac{1}{T_G} = \sum_n \frac{w_n}{T_{G,n}} \qquad \text{(G1)}$$

Mittels der vorstehenden Gleichung kann eine Glasübergangstemperatur für eine Polymermischung ermittelt werden. Hierin repräsentiert n die Laufzahl über die eingesetzten Polymere, $w_n$ den Massenanteil des jeweiligen Polymers n (Gew.-%) in der Polymermischung und $T_{G.n}$ die jeweilige Glasübergangstemperatur des jeweiligen Polymers n in K.

Die Gleichung G1 kann auch verwendet werden, um die Glasübergangstemperatur von Copolymeren zu berechnen. Dann repräsentiert n die Laufzahl über die eingesetzten Monomere, $w_n$ den Massenanteil des jeweiligen Monomers n (Gew.-%) und $T_{G.n}$ die jeweilige Glasübergangstemperatur des Homopolymers aus den jeweiligen Monomeren n in K.

Zur Erzielung der vorgegebenen Glasübergangstemperatur werden die Monomere sehr bevorzugt derart ausgesucht und die mengenmäßige Zusammensetzung der Monomermischung vorteilhaft derart gewählt, dass sich nach

der Gleichung (G1) der gewünschte $T_G$-Wert für das Basispolymer ergibt. Die resultierenden Polymere können dann derart gemischt werden, dass sich ebenfalls nach G1 der gewünschte $T_G$-Wert für die Basispolymermischung ergibt.

**Kautschukhaftklebemassen**

In einer vorteilhaften Ausführung der Erfindung werden als Haftklebemassen solche Systeme eingesetzt, die auf Naturkautschuk basieren. Für Naturkautschukklebemassen wird der Naturkautschuk bis zu einem Molekulargewicht (Gewichtsmittel) nicht unter 100.000 g/mol, bevorzugt nicht unter 500.000 g/mol gemahlen und additiviert.

Bei Kautschuk/Synthesekautschuk als Ausgangsmaterial für den Kleber sind weite Variationsmöglichkeiten gegeben, sei er aus der Gruppe der Naturkautschuke oder der Synthesekautschuke oder sei er aus einem beliebigen Blend aus Naturkautschuken und/oder Synthesekautschuken, wobei der Naturkautschuk oder die Naturkautschuke grundsätzlich aus allen erhältlichen Qualitäten wie zum Beispiel Crepe-, RSS-, ADS-, TSR- oder CV-Typen, je nach benötigtem Reinheits- und Viskositätsniveau, und der Synthesekautschuk oder die Synthesekautschuke aus der Gruppe der statistisch copolymerisierten Styrol-Butadien-Kautschuke (SBR), der Butadien-Kautschuke (BR), der synthetischen Polyisoprene (IR), der Butyl-Kautschuke (IIR), der halogenierten Butyl-Kautschuke (XIIR), der Acrylatkautschuke (ACM), der Etylen-Vinylacetat-Copolymeren (EVA) und der Polyurethane und/oder deren Blends gewählt werden können.

Weiterhin vorzugsweise können Kautschuken zur Verbesserung der Verarbeitbarkeit thermoplastische Elastomere mit einem Gewichtsanteil von 10 bis 50 Gew.-% zugesetzt werden, und zwar bezogen auf den Gesamtelastomeranteil. Stellvertretend genannt seien an dieser Stelle vor allem die besonders verträglichen Styrol-Isopren-Styrol- (SIS) und Styrol-Butadien-Styrol (SBS) -Typen.

**(Meth)Acrylathaftklebemassen**

In einer weiteren, besonders bevorzugten Ausführung der Erfindung werden bevorzugt Haftklebemassen auf Basis von (Meth)Acrylathaftklebemassen eingesetzt [im Rahmen dieser Schrift wird die Bezeichnung "(Meth)Acrylat..." zusammenfassend für den Ausdruck "Acrylat... und/oder Methacrylat..." bzw., je nach Sinnzusammenhang, für den Ausdruck "Acrylat... bzw. Methacrylat..." verwendet].

Die erfindungsgemäßen (Meth)Acrylathaftklebemassen umfassen eines oder mehrere (Meth)Acrylathomopolymere und/oder (Meth)Acrylatcopolymere, gegebenenfalls ein oder mehrere Polymere und/oder Copolymere [zusammenfassend: (Co)Polymere] auf nicht acrylischer Basis, üblicherweise einen oder mehrere Vernetzer, gegebenenfalls ein oder mehrere Beimischungen, wie insbesondere Klebharze sowie das erfindungsgemäß eingesetzte Carbonyleisen.

Die (Meth)Acrylat(co)polymere sind insbesondere durch radikalische Polymerisation erhältlich und basieren zu mindestens 50 Gew.-% auf zumindest einem acrylischen Monomer aus der Gruppe der Verbindungen der folgenden allgemeinen Formel:

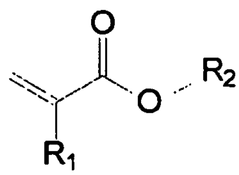

wobei $R_1$ = H oder $CH_3$ ist und der Rest $R_2$ = H oder $CH_3$ ist oder gewählt wird aus der Gruppe der verzweigten oder unverzweigten, gesättigten Alkylgruppen mit 1 - 30 Kohlenstoffatomen.

Die (Meth)Acrylat(co)polymere können dabei auf (meth)acrylische Monomere in Abwesenheit nicht (meth) acrylischer Comonomere und/oder auf (meth)acrylische Monomere in Kombination mit weiteren, nicht (meth)acrylischen Comonomeren (insbesondere vinylische Systeme) basieren.

Die Molmassen $M_w$ (gewichtsmittlere Molekulargewichte) der eingesetzten Basispolymere betragen vorteilhaft $M_w \geq 200.000$ g/mol, liegen aber bevorzugt aber bei maximal 2.000.000 g/mol.

<u>(Co)Monomere für (Meth)Acrylathaftklebemassen</u>

In einer sehr bevorzugten Weise werden zur Herstellung der Basispolymere Acryl- oder Methacrylmomonere eingesetzt, die Acryl- und Methacrylsäureester mit Alkylgruppen aus 4 bis 14 C-Atomen, bevorzugt 4 bis 9 C-Atomen umfassen. Spezifische Beispiele, ohne sich durch diese Aufzählung einschränken zu wollen, sind n-Butylacrylat, n-Butylmethacrylat, n-Pentylacrylat, n-Hexylacrylat, n-Heptylacrylat, n-Octylacrylat, n-Octylmethacrylat, n-Nonylacrylat,

Laurylacrylat und deren verzweigten Isomere, wie z.B. Isobutylacrylat, 2-Ethylhexylacrylat, 2-Ethylhexylmethacrylat, Isooctylacrylat, Isooctylmethacrylat.

Zur Reduzierung der Glasübergangstemperatur auf unterhalb - 30 °C werden besonders bevorzugt Acrylmonomere eingesetzt.

Weitere erfindungsgemäß vorteilhaft einzusetzende Verbindungsklassen sind monofunktionelle Acrylate bzw. Methacrylate von überbrückten Cycloalkylalkoholen, bestehend aus zumindestens 6 C-Atomen. Die Cycloalkylalkohole können auch substituiert sein, z.B. durch C-1-6-Alkylgruppen, Halogenatomen oder Cyanogruppen. Spezifische Beispiele sind Cyclohexylmethacrylate, Isobornylacrylat, Isobornylmethacrylate und 3,5-Dimethyladamantylacrylat.

In einer vorteilhaften Vorgehensweise werden allein oder zusätzlich Monomere eingesetzt, die polare Gruppen wie Carboxylreste, Sulfon- und Phosphonsäure, Hydroxyreste, Lactam und Lacton, N-substituiertes Amid, N-substituiertes Amin, Carbamat-, Epoxy-, Thiol-, Alkoxy-. Cyanreste, Ether oder ähnliches tragen. Moderate, erfindungsgemäß vorteilhaft einzusetzende basische Monomere sind z.B. N,N-Dialkylsubstituierte Amide, wie z.B. N,N-Dimethylacrylamid, N,N-Dimethylmethylmethacrylamid, N-tert.-Butylacrylamid, N-Vinylpyrrolidon, N-Vinyllactam, Dimethylaminoethylmethacrylat, Dimethylaminoethylacrylat, Diethylaminoethylmethacrylat, Diethylaminoethylacrylat, N-Methylolmethacrylamid, N-(Buthoxymethyl)-methacrylamid, N-Methylolacrylamid, N-(Ethoxymethyl)acrylamid, N-Isopropylacrylamid, wobei diese Aufzählung nicht abschließend ist.

Weitere bevorzutge Beispiele sind Hydroxyethylacrylat, Hydroxypropylacrylat, Hydroxyethylmethacrylat, Hydroxypropylmethacrylat, Allylalkohol, Maleinsäureanhydrid, Itaconsäureanhydrid, Itaconsäure, Glyceridylmethacrylat, Phenoxyethylacrlylat, Phenoxyethylmethacrylat, 2-Butoxyethylmethacrylat, 2-Butoxyethylacrylat, Cyanoethylmethacrylat, Cyanoethylacrylat, Glycerylmethacrylat, 6-Hydroxyhexylmethacrylat, Vinylessigsäure, Tetrahydrofufurylacrlyat, β-Acryloyloxypropionsäure, Trichloracrylsäure, Fumarsäure, Crotonsäure, Aconitsäure, Dimethylacrylsäure, wobei diese Aufzählung nicht abschließend ist.

In einer weiteren sehr bevorzugten Vorgehensweise werden als Comonomere Vinylester, Vinylether, Vinylhalogenide, Vinylidenhalogenide, Vinylverbindungen mit aromatischen Cyclen und Heterocyclen in α-Stellung eingesetzt. Auch hier seien nicht ausschließlich einige Beispiele genannt: Vinylacetat, Vinylformamid, Vinylpyridin, Ethylvinylether, Vinylchlorid, Vinylidenchlorid und Acrylonitril.

In einer vorteilhaften Ausführungsvariante werden zu den beschriebenen (Co)Monomeren zu geringen Teilen Monomere hinzugesetzt, die eine hohe statische Glasübergangstemperatur besitzen. Als Komponenten eigenen sich aromatische Vinylverbindungen, wie z.B. Styrol, wobei bevorzugt die aromatischen Kerne aus $C_4$- bis $C_{18}$-Bausteinen bestehen und auch Heteroatome enthalten können. Besonders bevorzugte Beispiele sind 4-Vinylpyridin, N-Vinylphthalimid, Methylstyrol, 3,4-Dimethoxystyrol, 4-Vinylbenzoesäure, Benzylacrylat, Benzylmethacrylat, Phenylacrylat, Phenylmethacrylat, t-Butylphenylacrylat, t-Butylphenylmethacrylat, 4-Biphenylacrylat und -methacrylat, 2-Naphthylacrylat und -methacrylat sowie Mischungen aus denjenigen Monomeren, wobei diese Aufzählung nicht abschließend ist. Der Anteil beträgt insbesondere maximal 10 Gew.-% an der Haftklebemasse.

## Carbonyleisen

Ein wesentlicher Bestanteil der Haftklebemasse sind die Carbonyleisen-Additivierungen. Carbonyleisen wird üblicherweise aus $Fe(CO)_5$ gewonnen, zeichnet sich durch seine hohe Reinheit aus und ist kommerziell erhältlich.

Für die Verwendung in Haftklebemassen ist die Partikelgröße einflussgebend. So weisen die erfindungsgemäß eingesetzten Carbonyleisen-Partikel bevorzugt einen Durchmesser zwischen 0,1 und 10 μm, sehr bevorzugt zwischen 1 und 8 μm auf. Der Gewichtsanteil an Carbonyleisen liegt bevorzugt zwischen 30 und 60, mehr bevorzugt zwischen 35 und 45 pph, bezogen auf die Basispolymere. Für die erfindungsgemäßen Haftklebemassen wird bevorzugt hydriertes Carbonyleisen eingesetzt. Durch die Hydrierung erhält das Material eine weichere Struktur, die die Kompatibilität mit der Haftklebemasse verbessert. Für die Erreichung der erfindungsgemäß geforderten Eigenschaften ist es besonders von Vorteil, wenn der Reinheitsgrad bei größer 97 %, sehr bevorzugt bei größer 99 % liegt.

## Harze

Zur Weiterentwicklung der Haftklebemasse können den Basispolymeren unter anderem Harze beigemischt sein. Als Harze werden im allgemeinen oligomere oder polymere Verbindungen eingesetzt, deren mittleres Molekulargewicht niedriger als das der Basispolymere liegt, insbesondere nicht mehr als 10.000 g/mol beträgt.

Als zuzusetzende klebrigmachende Harze sind ausnahmslos alle vorbekannten und in der Literatur beschriebenen Klebharze einsetzbar. Genannt seien stellvertretend die Pinen-, Inden- und Kolophoniumharze, deren disproportionierte, hydrierte, polymerisierte, veresterte Derivate und Salze, die aliphatischen und aromatischen Kohlenwasserstoffharze, Terpenharze und Terpenphenolharze sowie C5-, C9- sowie andere Kohlenwasserstoffharze. Beliebige Kombinationen dieser und weiterer Harze können eingesetzt werden, um die Eigenschaften der resultierenden Klebmasse wunschgemäß einzustellen. Im allgemeinen lassen sich alle mit dem entsprechenden Polyacrylat kompatiblen (löslichen)

Harze einsetzen, insbesondere sei verwiesen auf alle aliphatischen, aromatischen, alkylaromatischen Kohlenwasserstoffharze, Kohlenwasserstoffharze auf Basis reiner Monomere, hydrierte Kohlenwasserstoffharze, funktionelle Kohlenwasserstoffharze sowie Naturharze. Auf die Darstellung des Wissensstandes im "Handbook of Pressure Sensitive Adhesive Technology" von Donatas Satas (van Nostrand, 1989) sei ausdrücklich hingewiesen.

**Vernetzer**

Für eine gegebenenfalls erfolgende Vernetzung der Haftklebemasse ist es vorteilhaft, der Masse Vernetzer und gegebenenfalls Promotoren zuzugeben.

So können der Haftklebemasse Vernetzer auf Epoxid-Basis beigemischt sein. Als epoxidgruppenhaltige Substanzen, die als Vernetzer dienen können, werden insbesondere multifunktionelle Epoxide eingesetzt, also solche, die mindestens zwei Epoxideinheiten pro Molekül aufweisen (also mindestens bifunktional sind). Dies können sowohl aromatische als auch aliphatische Verbindungen sein.

Weiterhin können der Haftklebemasse Beschleuniger für die Vernetzungsreaktion mit den Epoxiden zugesetzt werden. Als Beschleuniger werden besonders bevorzugt Amine (formell als Substitutionsprodukte des Ammoniaks aufzufassen; die Substituenten R umfassen insbesondere Alkyl- und/oder Arylreste und/oder andere organische Reste) eingesetzt, insbesondere bevorzugt solche Amine, die mit den Bausteinen der Haftklebemasse keine oder nur geringfügige Reaktionen eingehen.

Prinzipiell können als Beschleuniger sowohl primäre ($NRH_2$), sekundäre ($NR_2H$) als auch tertiäre Amine ($NR_3$) gewählt werden, selbstverständlich auch solche, die mehrere primäre und/oder sekundäre und/oder tertiäre Amingruppen aufweisen.

Als Beschleuniger können vorteilhaft auch multifunktionelle Amine wie Diamine, Triamine und/oder Tetramine eingesetzt werden. Hervorragend geeignet sind zum Beispiel Diethylentriamin, Triethylentetramin und/oder Trimethylhexamethylendiamin,

Geeignet sind auch Beschleuniger auf Phosphatbasis wie Phosphine und/oder Phosphoniumverbindungen, wie beispielsweise Triphenylphosphin oder Tetraphenylphosphonium-tetraphenylborat.

Das Vernetzer-Beschleuniger-System wird dermaßen gewählt, dass die funktionellen Gruppen mit den Epoxidgruppen eine Verknüpfungsreaktion, insbesondere in Form einer Addition oder Substitution, eingehen können. Bevorzugt kommt es also zu einer Verknüpfung der die funktionellen Gruppen tragenden Bausteine mit den die Epoxidgruppen tragenden Bausteinen (insbesondere im Sinne einer Vernetzung der entsprechenden die funktionellen Gruppen tragenden Polymerbausteine über die Epoxidgruppen tragenden Substanzen als Verknüpfungsbrücken).

Es hat sich grundsätzlich als sehr vorteilhaft herausgestellt, wenn man den Vernetzer, also die epoxidgruppenhaltige Substanz, zu 0,1 - 5 Gew-%, bezogen auf das Polymer ohne Additive, hinzusetzt.

Vorteilhaft ist es, den Beschleuniger zu 0,05 - 5 Gew-%, bezogen auf das additivfreie Polymer, zuzugeben.

Es ist besonders vorteilhaft, wenn der Vernetzeranteil derart gewählt wird, dass ein elastischer Anteil der vernetzten Polyacrylate von mindestens 20 % resultiert. Bevorzugt beträgt der elastische Anteil mindestens 40 %, weiter bevorzugt mindestens 60 %.

Zur Angabe der Verhältnisse der Bestandteile des Vernetzer-Beschleuniger-Systems zueinander kann insbesondere das Verhältnis der Anzahl der Epoxidgruppen im Vernetzer zur Anzahl der reaktiven funktionellen Gruppen im Polymer herangezogen werden. Grundsätzlich kann dieses Verhältnis frei gewählt werden, so dass entweder ein Überschuss an funktionellen Gruppen, zahlenmäßige Gleichheit der Gruppen oder ein Überschuss an Epoxidgruppen vorliegt.

Vorteilhaft wird dieses Verhältnis derart gewählt, dass die Epoxidgruppen im Unterschuss (bis maximal anzahliger Gleichheit) vorliegen; ganz besonders bevorzugt liegt das Verhältnis der Gesamtzahl der Epoxidgruppen im Vernetzer zur Anzahl der funktionellen Gruppen im Polymer im Bereich von 0,1 : 1 bis 1 : 1.

Eine weitere Kennzahl ist das Verhältnis der Anzahl beschleunigungswirksamer Gruppen im Beschleuniger zur Anzahl der Epoxidgruppen im Vernetzer. Als beschleunigungswirksame Gruppen werden insbesondere sekundäre Amingruppen und tertiäre Amingruppen gerechnet. Auch dieses Verhältnis kann grundsätzlich frei gewählt werden, so dass entweder ein Überschuss an beschleunigungswirksamen Gruppen, zahlenmäßige Gleichheit der Gruppen oder ein Überschuss an Epoxidgruppen vorliegt.

Das Vernetzer-Beschleuniger-System lässt sich insbesondere für (Meth)Acrylathaftklebemassen einsetzen und dient zur thermischen Vernetzung der Poly(meth)acrylate, wobei zumindest ein Teil der (Meth)Acrylsäureester funktionelle Gruppen enthält, die mit Epoxidgruppen in vorstehend geschilderter Weise, insbesondere unter Bildung einer kovalenten Bindung, reagieren können.

Zu einer optionalen Vernetzung mit UV-Licht können den Polyacrylathaftklebemassen UV-absorbierende Photoinitiatoren zugesetzt werden. Nützliche Photoinitiatoren, welche sehr gut zu verwenden sind, sind Benzoinether, wie z. B. Benzoinmethylether und Benzoinisopropylether, substituierte Acetophenone, wie z. B. 2,2-Diethoxyacetophenon (erhältlich als Irgacure 651® von Fa. Ciba Geigy®), 2,2-Dimethoxy-2-phenyl-1-phenylethanon, Dimethoxyhydroxyacetophenon, substituierte α-Ketole, wie z. B. 2-Methoxy-2-hydroxypropiophenon, aromatische Sulfonylchloride, wie z. B.

2-Naphthyl sulfonylchlorid, und photoaktive Oxime, wie z. B. 1-Phenyl-1,2-propandion-2-(O-ethoxycarbonyl)oxim.

Als Photoinitiatoren sind insbesondere Norrish-I-Photoinitiatoren [Radikalbildung durch Photofragmentierung ($\alpha$-Spaltung) einer Carbonyl-Verbindung in ein Acyl-Radikal und ein Alkyl-Radikal] und Norrish-II-Photoinitiatoren [Radikalbildung durch intramolekulare Wasserstoff-Abstraktion durch eine photochemisch angeregte Carbonyl-Gruppe] geeignet.

Die vorstehend erwähnten und/oder weitere einsetzbare Photoinititatioren können insbesondere folgende Reste enthalten: Benzophenon-, Acetophenon-, Benzil-, Benzoin-, Hydroxyalkylphenon-, Phenylcyclohexylketon-, Anthrachinon-, Trimethylbenzoylphosphinoxid-, Methylthiophenylmorpholinketon-, Aminoketon-, Azobenzoin-, Thioxanthon-, Hexarylbisimidazol-, Triazin-, oder Fluorenon, wobei jeder dieser Reste zusätzlich mit einem oder mehreren Halogenatomen und/oder einer oder mehreren Alkyloxygruppen und/oder einer oder mehreren Aminogruppen oder Hydroxygruppen substituiert sein kann.

**Weitere Beimischungen**

Den Haftklebemassen können weiterhin optional Weichmacher (Plastifizierungsmittel), weitere Füllstoffe (wie. z. B. Fasern, Ruß, Zinkoxid, Kreide, Voll- oder Hohlglaskugeln, Mikrokugeln aus anderen Materialien, Kieselsäure, Silikate), Keimbildner, elektrisch leitfähige Materialien, wie z.B. konjugierte Polymere, dotierte konjugierte Polymere, Metallpigmente, Metallpartikel, Metallsalze, Graphit, etc., Blähmittel, Compoundierungsmittel und/oder Alterungsschutzmittel, z.B. in Form von primären und sekundären Antioxidantien oder in Form von Lichtschutzmitteln zugesetzt sein.

**Herstellverfahren**

Polymerisation

Die Herstellung der Haftklebemassen kann nach den dem Fachmann geläufigen Verfahren geschehen, insbesondere vorteilhaft durch konventionelle radikalische Polymerisationen oder kontrollierte radikalische Polymerisationen. Die Polymerisation kann in Lösung als auch in Schmelze erfolgen. Zur Polymerisation werden die Monomere sehr bevorzugt dermaßen gewählt, dass die resultierenden Polymere als industriell verwendbare Haftklebemassen eingesetzt werden können (vgl. "Handbook of Pressure Sensitive Adhesive Technology" von Donatas Satas (van Nostrand, New York 1989).

Die Steuerung der gewünschten Glasübergangstemperatur des Polymers kann durch die Anwendung der Gleichung (G1) in Analogie zur Fox-Gleichung (vgl. T.G. Fox, Bull. Am. Phys. Soc. 1 (1956) 123) bei der Zusammenstellung der Monomermischung, welche der Polymerisation zugrunde liegt, erzielt werden.

$$\frac{1}{T_G} = \sum_n \frac{w_n}{T_{G,n}} \qquad \text{(G1)}$$

In der Gleichung (G1) repräsentiert n die Laufzahl über die eingesetzten Monomere, $w_a$ den Massenanteil des jeweiligen Monomers n (Gew.-%) und $T_{G,n}$ die jeweilige Glasübergangstemperatur des Homopolymers aus den jeweiligen Monomeren n in K. Die Glasübergangstemperatur der der Haftklebemassen zugrunde liegenden Polymere liegt vorteilhaft unterhalb 25 °C im Sinne einer dynamischen Glasübergangstemperatur für amorphe Systeme und der Schmelztemperalur für semikristalline Systeme verstanden, die durch dynamisch mechanische Analyse (DMA) bei geringen Frequenzen bestimmt werden können.

In einer ersten Herstellungsvariante werden die Carbonyleisenpartikeln bereits vor oder bei der Polymerisation zugesetzt, also zu einem Zeitpunkt, zu dem die Polymerisation noch nicht abgeschlossen ist.

In einer alternativen Vorgehensweise werden die Carbonyleisenpartikeln erst den Polymerisationsprodukten zugesetzt.

Zur Herstellung der erfindungsgemäßen Haftklebemasse können die Polymerisationsprodukte in Lösung mit den Carbonyleisenpartikeln und/oder den Harzen und/oder mit weiteren Additiven abgemischt werden.

Bevorzugt wird die Abmischung der Polymerisationsprodukte mit den zuzumischenden Komponenten (Corbonyleisen, Harze, andere Additive...) jedoch in der Schmelze durchgeführt (Hotmelt- oder Heißschmelz-Systeme).

Auch die Beschichtung der Haftklebemasse zur Herstellung von Haftklebebändern kann aus Lösung erfolgen. Für thermisch vernetzende Haftklebemassen wird dann über Wärmezufuhr, z.B. in einem Trockenkanal, das Lösemittel entfernt und die Vernetzungsreaktion initiiert. Dieser Prozess lässt sich im großindustriellen Maßstab aber nur schwierig umsetzen.

Vorteilhaft wird daher auch die Beschichtung zur Herstellung von Klebebändern aus der Schmelze vorgenommen; insbesondere dann ist es vorteilhaft, auch die Zugabe des Carbonyleisens und/oder der anderen Additive in der Schmelze vorzunehmen.

Die noch nicht mit Beimischungen versetzten oder gegebenenfalls bereits abgemischten oder teilabgemischten Polymerisationsprodukte werden im folgenden vereinfachend auch als "Polymerisate" bezeichnet.

Aufkonzentration

Für die Verarbeitung der Polymerisate, insbesondere zur Herstellung von Haftklebebändern, kann es erforderlich sein, das Lösemittel zu entfernen (Verarbeitung als Hotmelt, thermische Vernetzung usw.). Hierfür können im Prinzip alle dem Fachmann bekannten Verfahren eingesetzt werden. Ein sehr bevorzugtes Verfahren ist die Aufkonzentration über einen Ein- oder Doppelschneckenextruder. Der Doppelschneckenextruder kann gleich- oder gegenläufig betrieben werden. Das Lösemittel oder Wasser wird bevorzugt über mehrere Vakuumstufen abdestilliert. Zudem wird je nach Destillationstemperatur des Lösemittels gegengeheizt. Die Restlösemittelanteile der im folgenden als "lösemittelfrei" bezeichneten Polymerisate betragen bevorzugt < 1 %, mehr bevorzugt < 0,5 % und sehr bevorzugt < 0,2 %.

Hotmelt-Prozess

Zur Verarbeitung in der Schmelze werden die lösemittelfreien Polymerisate in einen Compounder überführt. In besonderen Ausführungen des erfindungsgemäßen Verfahrens kann die Aufkonzentration und die Compoundierung mit den Carbonyleisen im selben Reaktor stattfinden.

Insbesondere kann als Compounder ein Extruder eingesetzt werden. Die Polymerisate liegen im Compounder in der Schmelze vor, entweder indem sie bereits im Schmelzzustand eingegeben werden oder indem sie im Compounder bis zur Schmelze erhitzt werden. Im Compounder werden die Polymerisate durch Beheizung in der Schmelze gehalten.

Solange weder Vernetzer (Epoxide) noch Beschleuniger im Polymerisat vorliegen, wird die mögliche Maximaltemperatur in der Schmelze durch die Zersetzungstemperatur des Polymerisates begrenzt. Die Prozesstemperatur im Compounder liegt üblicherweise zwischen 80 bis 150 °C, insbesondere zwischen 100 und 120 °C.

Die eingebrachte Energie kann in einer bevorzugten Vorgehensweise auch zur Abmischung der Haftklebemasse mit dem Carbonyleisen eingesetzt werden. Es wird z.B. in einem Doppelschneckenextruder genügend Scherenergie in die Masse eingebracht, um eine homogene Verteilung der Carbonyleisenpartikel in der Haftklebematrix zu erzielen. In aus Lösung abgemischten Systeme treten dagegen immer partielle Entmischungen durch die Erdgravitation auf, die die Homogenisierung und somit auch die Wirkung minimieren.

Sofern epoxidgruppenhaltige Vernetzer zugesetzt werden, werden diese dem Polymerisaten vor oder mit der Beschleunigerzugabe zugesetzt.

Die epoxidgruppenhaltigen Substanzen können den Monomeren bzw. der Polymerisationsmischung bereits vor oder der Polymerisationsmischung während der Polymerisationsphase zugegeben werden, wenn sie für diese Phase hinreichend stabil sind.

Vorteilhaft werden die epoxidgruppenhaltigen Substanzen den Polymerisaten aber entweder vor der Zugabe in den Compounder oder bei der Zugabe in den Compounder zugesetzt, also zusammen mit den Polymerisationsprodukten in den Compounder gegeben.

Es kann weiterhin vorteilhaft sein, die epoxidgruppenhaltigen Vernetzersubstanzen den Polymerisaten erst kurz vor der Weiterverarbeitung (insbesondere einer Beschichtung) zuzusetzen, insbesondere wenn es sich um thermische Vernetzer handelt, die sehr reaktiv sind. Hiermit kann die Verweilzeit vor der Beschichtung minimiert und somit eine Vergelungsreaktion (unkontrolliertes Vernetzen) minimiert werden. Die Vernetzersubstanzen sollten den Polymerisaten aber so früh zugesetzt werden, dass noch eine homogene Durchmischung möglich ist und so ein gleichmäßig vernetztes Produkt entstehen kann.

In sehr vorteilhafter Vorgehensweise werden die Beschleunigersubstanzen den Polymerisaten kurz vor der Weiterverarbeitung der Polymere, insbesondere einer Beschichtung oder anderweitigen Ausformung, zugesetzt.

Das Zeitfenster der Zugabe vor der Beschichtung richtet sich insbesondere nach der zur Verfügung stehenden Topfzeit, also der Verarbeitungszeit in der Schmelze, ohne dass die Eigenschaften des resultierenden Produktes nachteilig verändert werden. Mit dem Verfahren können Topfzeiten von einigen Minuten bis zu einigen zehn Minuten erzielt werden (je nach Wahl der Versuchsparameter), so dass der Beschleuniger innerhalb dieser Zeitspanne vor der Beschichtung zugesetzt werden sollte. Vorteilhaft wird der Beschleuniger so spät wie möglich im Hotmelt zugesetzt, aber so früh wie nötig, dass noch eine gute Homogenisierung mit der Polymermasse erfolgt.

Als sehr vorteilhaft haben sich hier Zeitspannen von 2 bis 10 Minuten, insbesondere von mehr als 5 Minuten, bei einer Prozesstemperatur von 110 bis 120 °C herausgestellt.

Die Vernetzer (Epoxide) und die Beschleuniger können auch beide kurz vor der Weiterverarbeitung des Polymers zugesetzt werden, also vorteilhaft in der Phase, wie sie vorstehend für die Beschleuniger dargestellt ist. Hierzu ist es vorteilhaft, das Vernetzer-Beschleuniger-System an ein- und derselben Stelle gleichzeitig in den Prozess eingebracht

werden, auch als Epoxid-Beschleuniger-Abmischung.

Grundsätzlich ist es auch möglich, die Zugabezeitpunkte bzw. Zugabestellen an Vernetzer und Beschleuniger in den oben dargestellten Ausführungen zu vertauschen, so dass der Beschleuniger vor den epoxidgruppenhaltigen Substanzen zugesetzt werden kann.

Im Compoundierungsprozess beträgt die Temperatur des Polymerisats bei der Zugabe der Vernetzer und/oder der Beschleuniger zwischen 50 und 150 °C, bevorzugt zwischen 70 und 130 °C, besonders bevorzugt zwischen 80 und 120 °C.

Beschichtung

Die Carbonyleisen-haltigen Haftklebemassen werden ein- oder doppelseitig auf ein Trägermaterial aufgetragen. Als Trägermaterialien eigenen sich besonders bevorzugt Folien bestehend aus polymeren Materialien, wie z.B. Polyethylen (PE), Polypropylen (PP), Polyimiden, Polyamiden, Biaxial orientiertes Polypropylen (BOPP), Polyethylenterephthalat (PET), Polyvinylchlorid (PVC), Polyurethan (PUR) oder Nylon. Es können aber erfindungsgemäß auch Vliese oder Gewebe als Trägermaterialien eingesetzt werden.

Es ist von Vorteil, wenn die Trägermaterialien ein- oder beidseitig metallisiert sind, insbesondere vorteilhaft auf einer oder beiden Seiten mit einer vollflächigen Metallschicht versehen sind. Eine Metallisierung der Trägermaterialien kann insbesondere durch Metallbedampfung erfolgen, besonders bevorzugt durch den so genannten "Sputterprozess".

Des Weiteren können als Trägermaterialien auch Metallfolien, metallbedampfte Folien oder Metallfolienlaminate beschichtet werden.

Zur Gruppe der Metalle, die erfindungsgemäß als Trägermaterialien oder zur Metallisierung von Trägermaterialien verwendet werden können, zählen z.B. Nickel, Gold, Silber, Eisen, Aluminium, Blei, Zinn, Zink, Edelstahl, Bronze und Kupfer. Weiterhin nützlich sind z.B. auch Blei/Zinn Legierungen.

Weiterhin können elektrisch leitfähige Trägermaterialien auf Polymerbasis eingesetzt werden oder elektrisch leitfähige Polymermaterialien als Beschichtung für Trägermaterialien, insbesondere als Lack, eingesetzt werden. Beispiele für elektrisch leitfähige Polymermaterialien als Träger und/oder als Beschichtung sind Polythiophen, substiuierte Polythiophene, Polyethylendioxythiophene, Polyanilin, substiutierte Polyaniline, Polyparaphenylen, substituierte Polyparaphenylene, Polypyrrol, substituierte Polypyrrole, Polyacetylene, substituierte Polyacetylene, Polyphenylsulfide, substituierte Polyphenylsulfide, Polyfurane, substituierte Polyfurane Polyalkylfluoren, substituierte Polyalkylfluorene sowie Gemische aus den obengenannten Polymeren. Zur Verbesserung der Leitfähigkeit können so genannte Dopants hinzugefügt werden. Hier können verschiedene Metallsalze oder Lewis-Säure oder Elektrophile eingesetzt werden.

Die Beschichtung erfolgt nach den üblichen Beschichtungsverfahren, insbesondere mittels Walzenbeschichtungsverfahren, Schmelzdüsenverfahren, oder Extrusionsbeschichtungsverfahren (insbesondere mittels T-Düse, Fischschwanz-Düse oder Bügel-Düse).

Vernetzung

Die Vernetzung der Haftklebemasse erfolgt bevorzugt nach der Beschichtung. Es können die üblichen Vernetzungsmethoden eingesetzt werden (thermische Vernetzung, UV-Vernetzung, ESH-Vernetzung).

Insbesondere vorteilhaft werden thermische Vernetzungsverfahren eingesetzt, die für aus der Schmelze verarbeitbare Haftklebemassen entwickelt wurden. Hierzu ist es vorteilhaft, den Haftklebemassen insbesondere die vorstehend genannten Vernetzer auf Epoxidbasis zuzugeben, bevorzugt unter Einsatz der dort genannten Beschleuniger für Epoxid-Vernetzer. Derartige Vernetzungsverfahren führen zu besonders homogen vernetzten Produkten.

## Produktaufbauten

a) Einseitiger Produktaufbau

In einer ersten, einseitigen Ausführungsform bestehen die erfindungsgemäßen antistatischen Haftklebebänder aus einer (optional metallisierten) Trägerschicht und einer Haftklebemassenschicht. Die Schichtdicke der Haftklebemasse beträgt zwischen 5 $\mu$m und 1 mm, bevorzugt zwischen 25 und 200 $\mu$m. Zur Verwendung als Haftklebebandrolle kann die Haftklebemasse vorteilhaft mit einem Trennpapier/folie abgedeckt werden. Weiter bevorzugt wird die der Haftklebemasse gegenüberliegende Seite des Trägmaterials mit einer Releaseschicht versehen. Sehr bevorzugt werden silikonbasierende oder fluorierte Polymere als Releasematerial eingesetzt.

b) doppelseitiger Aufbau

In einer weiteren, zweiseitigen Ausführungsform bestehen die erfindungsgemäßen Haftklebebänder aus einer

Trägerschicht mit jeweils einer Haftklebemassenschicht auf beiden (optional metallisierten) Seiten des Trägers. Die Schichtdicke der Haftklebemassen beträgt zwischen 5 μm und 1 mm, bevorzugt zwischen 25 und 200 μm. In einer sehr bevorzugten Ausführung sind beide Haftklebemassen in Ihrer Zusammensetzung identisch. Zur Verwendung als Haftklebebandrolle wird das Haftklebeband sehr bevorzugt auf zumindest einer der Haftklebemassenschichten mit einem Trennpapier oder einer Trennfolie eingedeckt.

c) Transfertape-Aufbau

In einer dritten vorteilhaften Ausführungsvariante werden die erfindungsgemäßen Haftklebebänder für ein Transferklebeband (also ein trägerloses Klebeband, auch als Transfertape bezeichnet) eingesetzt. Die Haftklebemasse ist auf einem(r) Trennpapier/folie beschichtet, die die Abrollung des Haftklebebandes ermöglicht und zur/bei der Verwendung des Klebebandes entfernt wird.

Die Schichtdicke der Haftklebemasse beträgt zwischen 5 μm und 1 mm, bevorzugt zwischen 25 und 200 μm.

## Experimente

Die Erfindung wird im Folgenden durch Experimente beschrieben, ohne sich durch die Wahl der untersuchten Proben unnötig beschränken zu wollen.

Folgende Mess- bzw. Testmethoden wurden angewendet.

Geräuschpegeltest für Widerstände (Test A)

Die Messung wurde bei 1 GhZ durchgeführt und die Messwerte sind in db (Dezibel) angegeben. Die Messung erfolgte analog MIL STD 202 mit der Submethodik 308. Die Messung wurde mit 10 $N/cm^2$ durchgeführt.

Messung des Isolationswiderstandes (Test B)

Die Messung des elektrischen Isolationswiderstandes erfolgte nach MIL STD 202 mit der Submethodik 302. Es wurde mit 500 V gemessen.

180° Klebkrafttest (Test C

Der Klebkrafttest wurde nach ASTM D330 durchgeführt. Ein 20 mm breiter Streifen eines ein- bzw. doppelseitigen Haftklebebandes wurde auf zuvor zweimal mit Aceton und einmal mit Isopropanol gereinigte und getrocknete Stahlplatten aufgebracht. Doppelseitige Haftklebebänder werden mit einer 40 μm dicken PVC Folie abgedeckt. Der Haftklebestreifen wurde zweimal mit einem 2 kg Gewicht auf das Substrat aufgedrückt. Das Klebeband wurde anschließend sofort mit 300 mm/min und im 180° Winkel vom Substrat abgezogen und die Abzugskraft gemessen.

Die Messergebnisse sind in N/cm angegeben und sind gemittelt aus drei Messungen. Alle Messungen wurden bei Raumtemperatur unter klimatisierten Bedingungen (23°C, 50 % Feuchtigkeit) durchgeführt.

Gelpermeationschromatographie GPC

Die Bestimmung des mittleren Molekulargewichtes Mw und der Polydisperistät PD erfolgte mittels Gelpermeationschromatographie. Als Eluent wurde THF mit 0.1 Vol.-% Trifluoressigsäure eingesetzt. Die Messung erfolgte bei 25°C. Als Vorsäule wurde PSS-SDV, 5 μ, $10^3$ Å, ID 8.0 mm x 50 mm verwendet. Zur Auftrennung wurden die Säulen PSS-SDV, 5 μ, $10^3$ sowie $10^5$ und $10^6$ mit jeweils ID 8,0 mm x 300 mm eingesetzt. Die Probenkonzentration betrug 4 g/l, die Durchflussmenge 1.0 ml pro Minute. Es wurde gegen PMMA-Standards gemessen.

Herstellung der Proben

Kommerziell erhältliche, eingesetzte Chemikalien

| *Chemische Verbindung* | *Handelsname* | *Hersteller* | *CAS-Nr.* |
|---|---|---|---|
| Bis-(4-tert-butylcyclohexyl)peroxydicarbonat | Perkadox® 16 | Akzo Nobel | 15520-11-3 |

(fortgesetzt)

| Chemische Verbindung | Handelsname | Hersteller | CAS-Nr. |
|---|---|---|---|
| Pentaerythrittetraglycidether | Polypox® R16 | UPPC AG | 3126-63-4 |
| Triethylentetramin | Epikure® 3234 | Hexion Speciality Chemicals | 112-24-3 |
| Isopropyliertes Triarylphosphat | Reofos® 65 | Great Lakes, USA | 68937-41-7 |
| 2,2'-Azobis(2-methylpropionitril), AIBN | Vazo® 64 | DuPont | 78-67-1 |
| alle Spezifikationsangaben bei 20 °C;<br>Epikure® auch vertrieben unter den Handelsbezeichnungen Epi-Cure® und Bakelite® EPH | | | |

Basispolymer P1

Ein für radikalische Polymerisationen konventioneller Reaktor wurde mit 49 kg 2-Ethylhexylacrylat, 49 kg n-Butylacrylat, 2 kg Acrylsäure und 66 kg Aceton/Isopropanol (92,5:7,5) befüllt. Nach 45minütiger Durchleitung von Stickstoffgas unter Rühren wurde der Reaktor auf 58°C hochgeheizt und 50 g AIBN hinzugegeben. Anschließend wurde das äußere Heizbad auf 75°C erwärmt und die Reaktion konstant bei dieser Außentemperatur durchgeführt. Nach 1 h wurden erneut 50 g AIBN zugegeben und nach 4 h wurde mit 20 kg Aceton/Isopropanol Gemisch verdünnt.

Nach 5 sowie nach 7 h wurde jeweils mit 150 g Bis-(4-tert-butylcyclohexyl)-peroxydicarbonat nachinitiiert. Nach 22 h Reaktionszeit wurde die Polymerisation abgebrochen und auf Raumtemperatur abgekühlt. Das Polyacrylat hat ein gewichtsmittleres Molekulargewicht von $M_w$ = 705.000 g/mol, Polydispersität PD ($M_w/M_n$) = 8,9. Der kalkulierte $T_G$ nach Gleichung G1 beträgt - 46°C.

Basispolymer P2

Analog Beispiel P1 wurden 96 kg 2-Ethylhexylacrylat und 4 kg Acrylsäure in 66 kg Aceton/Isopropanol (92,5: 7,5) polymerisiert.

Das Polyacrylat hat ein gewichtsmittleres Molekulargewicht von $M_w$ = 677.000 g/mol, Polydispersität PD ($M_w/M_n$) = 8,2. Der kalkulierte $T_G$ nach Gleichung G1 beträgt - 35°C.

Basispolymer P3 (Referenz)

Analog Beispiel P1 wurden 90 kg 2-Ethylhexylacrylat und 10 kg Acrylsäure in 66 kg Aceton/Isopropanol (92,5: 7,5) polymerisiert.

Das Polyacrylat hat ein gewichtsmittleres Molekulargewicht von $M_w$ = 633.000 g/mol, Polydispersität PD ($M_w/M_n$) = 7,9. Der kalkulierte $T_G$ nach Gleichung G1 beträgt -16°C.

Carbonyleisen

Es wurden Carbonyleisen der Firma BASF eingesetzt. Als Typ wurde das Carbonyleisen Pulver CN (> 99.5 % Fe, 6 $\mu$m Partikeldurchmesser, Hydrogen-reduziert) und Carbonyleisen Pulver SM (> 99.5 % Fe, 3 $\mu$m Partikeldurchmesser, Hydrogen-reduziert) der BASF AG eingesetzt.

Herstellung der Haftklebebänder

Verfahren 1: Aufkonzentration / Herstellung der Schmelzhaftkleber:

Die Acrylatcopolymere (Basispolymere P1 bis P2) werden mittels Einschneckenextruder (Aufkonzentrationsextruder, Berstorff GmbH, Deutschland) weitestgehend vom Lösemittel befreit (Restlösemittelgehalt $\leq$ 0,3 Gew.-%) Die Drehzahl der Schnecke betrug 150 U/min, der Motorstrom 15 A, es wurde ein Durchsatz von 58,0 kg flüssig/h realisiert. Zur Aufkonzentration wurde an 3 verschiedenen Domen ein Vakuum angelegt. Die Unterdrücke betrugen jeweils zwischen 20 mbar und 300 mbar. Die Austrittstemperatur des aufkonzentrierten Hotmelts liegt bei ca. 115 °C. Der Feststoffgehalt betrug nach diesem Aufkonzentrationsschritt 99,8%.

Verfahren 2: Herstellung des abgemischten Schmelzhaftklebers

Die nach dem oben erläuterten Verfahren 1 hergestellten Acrylatschmelzhaftkleber wurden direkt in einen nachgeschalteten WELDING-Doppelschneckenextruder (WELDING Engineers, Orlando, USA; Model 30 MM DWD; Schneckendurchmesser 30 mm, Länge Schnecke 1 = 1258 mm; Länge Schnecke 2 = 1081 mm; 3 Zonen) gefördert. Über ein Feststoffdosiersystem wurde das Carbonyleisen Pulver in Zone 1 zudosiert und homogen eingemischt.

Verfahren 3: Herstellung der erfindungsgemäßen Klebebänder, Abmischung mit dem Vernetzer-Beschleuniger-System für die thermischen Vernetzung und Beschichtung

Die nach den Verfahren 1 und 2 hergestellten Acrylatschmelzhaftkleber wurden in einem Fütterextruder (Einschneckenförderextruder der Firma TROESTER GmbH & Co KG, Deutschland) aufgeschmolzen und mit diesem als Polymerschmelze in einen Doppelschneckenextruder gefördert (Fa. LEISTRITZ, Deutschland, Bez. LSM 30/34. Das Aggregat wird von außen elektrisch beheizt und über verschiedene Gebläse luftgekühlt und ist so konzipiert, dass bei guter Verteilung des Vernetzer-Beschleuniger-Systems in der Polymermatrix gleichzeitig eine kurze Verweilzeit der Klebmasse im Extruder gewährleistet ist. Dazu wurden die Mischwellen des Doppelschneckenextruders so angeordnet, dass sich fördernde und mischende Elemente abwechseln. Die Zugabe der jeweiligen Vernetzer und Beschleuniger erfolgt mit geeignetem Dosierequipment und gegebenenfalls unter Verwendung von Dosierhilfsmitteln in die druckfreien Förderzonen des Doppelschneckenextruders.

Nach Austritt der fertig compoundierten, d.h. mit dem Vernetzer-Beschleuniger-System abgemischten Klebmasse aus dem Doppelschneckenextruder (Austritt: Runddüse, 5 mm Durchmesser), erfolgt die Beschichtung auf ein bahnförmiges Trägermaterial. Die Zeit zwischen Zudosierung des Vernetzer-Beschleuniger-Systems bis zum Ausformen bzw. Beschichten wird als Verarbeitungszeit bezeichnet. Die Verarbeitungszeit gibt den Zeitraum an, in welcher die mit dem Vernetzer-Beschleuniger-System abgemischte Klebmasse mit optisch gutem Strichbild (gelfrei, stippenfrei) beschichtet werden kann. Die Beschichtung erfolgt mit Bahngeschwindigkeiten zwischen 1 m/min und 20 m/min, die Rakelwalze des 2-Walzenauftragswerks wird nicht angetrieben.

Abmischung Basispolymer P1

Das Basispolymer P1 wird gemäß dem beschriebenen Polymersationsverfahren polymerisiert, gemäß Verfahren 1 aufkonzentriert (Feststoffgehalt 99,8 %) und anschließend gemäß Verfahren 2 mit Carbonyleisen CN abgemischt. Diese modifizierte Acrylat-Hotmeltmasse wurde dann gemäß Verfahren 3 kontinuierlich mit dem Vernetzer-Beschleuniger-System bestehend aus einem

- Pentaerthrittetraglycidether, hier Polypox® R16 der Fa. UPPC AG, Deutschland (Epoxid)

und einem

- Triethylentriamin,

hier Epikure® 3234 der Fa. HEXION, Deutschland (Aminbeschleuniger) compoundiert.

Es wurden 0,08 Gew.-% des Epoxidvernetzers Pentaerythrittetraglycidether (bezogen auf das Polymer) und 0,13 Gew.-% des Aminbeschleunigers Triethylentetramin (bezogen auf das Polymer) zugemischt. Die Dosierung des Amins und des Epoxids erfolgt separat über zwei Schlauchpumpen.

Zur Verbesserung der Dosierfähigkeit und der erreichbaren Mischgüte wurde das verwendete Vernetzersystem mit dem flüssigen Phophatester (Isopropyliertes Triarylphosphat; Reofos 65; Fa. GREAT LAKES, USA) verdünnt (Verhältnis zum Vernetzer 0,5:1).

Abmischung Basispolymer P2

Das Basispolymer P2 wird gemäß dem beschriebenen Polymersationsverfahren polymerisiert, gemäß Verfahren 1 aufkonzentriert (Feststoffgehalt 99,8 %) und anschließend gemäß Verfahren 2 mit Carbonyleisen CN abgemischt. Diese modifizierte Acrylat-Hotmeltmasse wurde dann gemäß Verfahren 3 kontinuierlich mit dem Vernetzer-Beschleuniger-System bestehend aus einem

- Pentaerthrittetraglycidether,
  hier Polypox® R16 der Fa. UPPC AG, Deutschland (Epoxid)

und einem

- Triethylentriamin,

hier Epikure® 3234 der Fa. HEXION, Deutschland (Aminbeschleuniger) compoundiert.

Es wurden 0,16 Gew.-% des Epoxidvernetzers Pentaerythrittetraglycidether (bezogen auf das Polymer) und 0,26 Gew.-% des Aminbeschleunigers Triethylentetramin (bezogen auf das Polymer) zugemischt. Die Dosierung des Amins und des Epoxids erfolgt separat über zwei Schlauchpumpen.

Zur Verbesserung der Dosierfähigkeit und der erreichbaren Mischgüte wurde das verwendete Vernetzersystem mit dem flüssigen Phophatester (Isopropyliertes Triarylphosphat; Reofos 65; Fa. GREAT LAKES, USA) verdünnt (Verhältnis zum Vernetzer 0,5:1).

Abmischung Basispolymer P3 (Referenz)

Das Basispolymer P3 wird gemäß dem beschriebenen Polymersationsverfahren polymerisiert, gemäß Verfahren 1 aufkonzentriert (Feststoffgehalt 99,8 %) und anschließend gemäß Verfahren 2 Carbonyleisen CN abgemischt. Diese modifizierte Acrylat-Hotmeltmasse wurde dann gemäß Verfahren 3 kontinuierlich mit dem Vernetzer-Beschleuniger-System bestehend aus einem

- Pentaerthrittetraglycidether,
  hier Polypox® R16 der Fa. UPPC AG, Deutschland (Epoxid)

und einem

- Triethylentriamin,

hier Epikure® 3234 der Fa. HEXION, Deutschland (Aminbeschleuniger) compoundiert.

Es wurden 0,40 Gew.-% des Epoxidvernetzers Pentaerythrittetraglycidether (bezogen auf das Polymer) und 1,30 Gew.-% des Aminbeschleunigers Triethylentetramin (bezogen auf das Polymer) zugemischt. Die Dosierung des Amins und des Epoxids erfolgt separat über zwei Schlauchpumpen.

Zur Verbesserung der Dosierfähigkeit und der erreichbaren Mischgüte wurde das verwendete Vernetzersystem mit dem flüssigen Phophatester (Isopropyliertes Triarylphosphat; Reofos 65; Fa. GREAT LAKES, USA) verdünnt (Verhältnis zum Vernetzer 0,5:1).

Haftklebeband (1)

Polymer 1 (mit Vernetzerabmischung entsprechend Abmischung 1) mit 35 Gew.-% Carbonyleisenpulver CN abgemischt und beidseitig auf eine beidseitig aluminisierte 12 μm PET Folie mit jeweils 50 g/m$^2$ beschichtet.

Haftklebeband (2)

Polymer 1 (mit Vernetzerabmischung entsprechend Abmischung 1) wird mit 35 Gew.-% Carbonyleisenpulver SM abgemischt und beidseitig auf eine beidseitig aluminisierte 12 μm PET Folie mit jeweils 50 g/m$^2$ beschichtet.

Haftklebeband (3)

Polymer 2 (mit Vernetzerabmischung entsprechend Abmischung 2) wird mit 35 Gew.-% Carbonyleisenpulver CN abgemischt und beidseitig auf eine beidseitig aluminisierte 12 μm PET Folie mit jeweils 50 g/m$^2$ beschichtet.

Haftklebeband (4)

Polymer 2 (mit Vernetzerabmischung entsprechend Abmischung 2) wird mit 35 Gew.-% Carbonyleisenpulver SM abgemischt und beidseitig auf eine beidseitig aluminisierte 12 μm PET Folie mit jeweils 50 g/m$^2$ beschichtet.

Haftklebeband (5)

Polymer 1 (mit Vernetzerabmischung entsprechend Abmischung 1) wird mit 45 Gew.-% Carbonyleisenpulver SM abgemischt und beidseitig auf eine beidseitig aluminisierte 12 μm PET Folie mit jeweils 100 g/m$^2$ beschichtet.

Haftklebeband (6)

Polymer 1 (mit Vernetzerabmischung entsprechend Abmischung 1) wird mit 45 Gew.-% Carbonyleisenpulver SM abgemischt und einseitig auf eine 50 μm Kupferfolie mit 100 g/$m^2$ beschichtet.

Haftklebeband (7)

Polymer 1 (mit Vernetzerabmischung entsprechend Abmischung 1) wird mit 45 Gew.-% Carbonyleisenpulver SM abgemischt und einseitig mit 100 g/$m^2$ auf einen PE beschichteten Release Liner beschichtet.

Referenzbeispiele

Haftklebeband (R1)

Polymer 3 (mit Vernetzerabmischung nach Abmischung 3) wird mit 35 Gew.-% Carbonyleisenpulver CN abgemischt und beidseitig auf eine beidseitig aluminisierte 12 μm PET Folie mit jeweils 50 g/$m^2$ beschichtet.

Haftklebeband (R2)

Polymer 3 (mit Vernetzerabmischung nach Abmischung 3) wird mit 35 Gew.-% Carbonyleisenpulver SM abgemischt und beidseitig auf eine beidseitig aluminisierte 12 μm PET Folie mit jeweils 50 g/$m^2$ beschichtet.

Haftklebeband (R3)

Polymer 3 (mit Vernetzerabmischung nach Abmischung 3) wird mit 45 Gew.-% Carbonyleisenpulver CN abgemischt und beidseitig auf eine beidseitig aluminisierte 12 μm PET Folie mit jeweils 50 g/$m^2$ beschichtet.

Haftklebeband (R4)

Polymer 3 (mit Vernetzerabmischung nach Abmischung 3) wird mit 45 Gew.-% Carbonyleisenpulver SM abgemischt und beidseitig auf eine beidseitig aluminisierte 12 μm PET Folie mit jeweils 50 g/$m^2$ beschichtet.

Haftklebeband (R5)

Polymer 1 (mit Vernetzerabmischung nach Abmischung 1) wird mit 20 Gew.-% Carbonyleisenpulver SM abgemischt und beidseitig auf eine beidseitig aluminisierte 12 μm PET Folie mit jeweils 50 g/$m^2$ beschichtet.

Resultate

Zur Überprüfung der klebtechnischen Eigenschaften wurde die Klebkraft auf Stahl ermittelt. Die gemessenen Werte sind in Tabelle 1 aufgelistet:

Tabelle 1: Übersicht der ermittelten Klebkräfte nach Test C

| Haftklebeband | Klebkraft auf Stahl (Test C) in [N/cm] |
|---|---|
| 1 | 3,8 |
| 2 | 4,2 |
| 3 | 4,0 |
| 4 | 4,3 |
| 5 | 3,2 |
| 6 | 3,0 |
| 7 | 3,3 |
| R1 | 1,5 |
| R2 | 1,3 |

(fortgesetzt)

| Haftklebeband | Klebkraft auf Stahl (Test C) in [N/cm] |
|---|---|
| R3 | 0,8 |
| R4 | 0,7 |
| R5 | 4,9 |

Die in Tabelle 1 aufgezeigten Werte verdeutlichen, dass die Haftklebebänder 1 bis 7 haftklebrige Eigenschaften aufweisen. So liegen alle Klebkräfte nach ASTM 3330 bei 3,0 N/cm oder größer. Durch die höheren Anteile des Füllmaterials sinkt die Klebkraft ab. Bei Verwendung von Basispolymeren mit höheren $T_G$ (- 16 °C) sinkt dagegen die Klebkraft deutlich ab. Die Referenzbeispiele R1 bis R4 besitzen eine Klebkraft unterhalb 3 N/cm. Nur Referenzbeispiel R5 weist wiederum höhere Klebkräfte auf, da hier der Carbonyleisenanteil unterhalb 30 Gew.-% liegt.

Eine weitere Vorraussetzung für die erfindungsgemäßen Haftklebemassen ist der elektrische Isolationswiderstand. Daher wurden im Folgenden nach Testmethode B der elektrische Isolationswiderstand bestimmt. Die ermittelten Werte sind in Tabelle 2 zusammengefasst.

Tabelle 2: Übersicht des ermittelten Isolationswiderstandes nach Test B

| Beispiel | Elektrischer Isolationswiderstand |
|---|---|
| 1 | <1 Ω |
| 2 | <1 Ω |
| 3 | <1 Ω |
| 4 | <1 Ω |
| 5 | <0.1 Ω |
| 6 | <0.1 Ω |
| 7 | <0.1 Ω |
| R1 | <1 Ω |
| R2 | <1 Ω |
| R3 | <0.1 Ω |
| R4 | <0.1 Ω |
| R5 | 14 Ω |

Die Haftklebebänder besitzen alle geringe elektrische Widerstände und somit eine hohe elektrische Leitfähigkeit. Dies gilt auch für die Referenzbeispiele R1 bis R4, die ebenfalls einen hohen Carbonyleisenanteil aufweisen. Nur das Referenzbeispiel R5 mit einem Carbonyleisenanteil von 20 % besitzt einen deutlich höheren Widerstand.

Eine weitere Vorraussetzung für die erfindungsgemäßen Haftklebebänder ist der Geräuschpegeltest für Widerstände.

Die Messung wurde bei 1 GhZ durchgeführt und die Messwerte sind in db angegeben. In Tabelle 3 sind die Ergebnisse gelistet.

Tabelle 3: Geräuschpegeltest für Widerstände nach Test A

| Beispiel | Geräuschpegeltest nach Test A |
|---|---|
| 1 | 70 db |
| 2 | 70 db |
| 3 | 70 db |
| 4 | 70 db |
| 5 | 65 db |
| 6 | 65 db |

(fortgesetzt)

| Beispiel | Geräuschpegeltest nach Test A |
|---|---|
| 7 | 65 db |
| R1 | 70 db |
| R2 | 70 db |
| R3 | 65 db |
| R4 | 65 db |
| R5 | 80 db |

Die in Tabelle 3 aufgezeigten Werte verdeutlichen, dass die Haftklebebänder 1 bis 7 geräuschreduzierende Eigenschaften aufweisen. Durch die Mengen des Zusatzes lässt sich der Effekt verstärken. Die Referenzbeispiele R1 bis R4 besitzen ebenfalls geräuschreduzierende Wirkung. Nur das Referenzbeispiel R5 weist einen deutlich höheren Geräuschpegel auf wiederum durch den reduzierten Carbonyleisenanteil.

Nur die erfindungsgemäßen Beispiele 1 bis 7 erfüllen alle Anforderungen. Der Einsatz hoher Mengen (> 30 pph) Carbonyleisen führt zu guten Werten bezüglich des Isolationswiderstands und des Geräuschpegels. Die Eignung des Einsatzes von Carbonyleisen für die gewünschten EMI-Shielding-Eigenschaften ist damit nachgewiesen. Mit hohen Mengen an Carbonyleisen lassen jedoch die klebtechnischen Eigenschaften deutlich nach. Gute Haftklebeeigenschaften lassen sich aber überraschend erzielen, wenn gleichzeitig die geforderten Glasübergangswerte eingehalten werden. Hiermit konnte für den Fachmann in nicht zu erwartender Weise eine gute Abstimmung zwischen EMI-Shielding-Eigenschaften und Haftklebeeigenschaften erzielt werden.

Die erfindungsgemäßen Beispiele sind besonders bevorzugt für den Einsatz im Mobilfunktelefonbereich geeignet. Hier können die erfindungsgemäßen Beispiele die Funktionen EMI-Shielding und Haftkleben miteinander verbinden, so dass hier Bauteile schmaler und dünner ausgelegt werden können bzw. der Einsatz separater Bauteile, die die jeweilige Funktion innehaben, vermieden werden kann.

**Patentansprüche**

1. Haftklebemasse auf Basis eines oder mehrerer Basispolymere, wobei die Glasübergangstemperatur $T_G$ des einen Basispolymers, oder, sofern mehrere Basispolymere zugegen sind, die Glasübergangstemperatur $T_G$ der Basispolymermischung gemessen nach DIN53766 nicht über - 30°C beträgt, **dadurch gekennzeichnet, dass** mindestens 30 pph Carbonyleisen, bezogen auf die Basispolymere, zugesetzt sind.

2. Haftklebemasse nach Anspruch 1, **dadurch gekennzeichnet, dass** mindestens eines der Basispolymere ein Acrylat- und/oder ein Methacrylatpolymer ist.

3. Haftklebemasse nach einem der vorangehenden Ansprüche, **dadurch gekennzeichnet, dass** mindestens 35 pph Carbonyleisen, bezogen auf die Basispolymere, zugesetzt sind.

4. Haftklebemasse nach einem der vorangehenden Ansprüche, **dadurch gekennzeichnet, dass** nicht mehr als 60 pph Carbonyleisen, bezogen auf die Basispolymere, zugesetzt sind.

5. Haftklebemasse nach einem der vorangehenden Ansprüche, **dadurch gekennzeichnet, dass** Carbonyleisen mit einer Partikelgrößen von 0,1 bis 10 μm, insbesondere von 1 bis 8 μm eingesetzt wird.

6. Haftklebemasse nach einem der vorangehenden Ansprüche, **dadurch gekennzeichnet, dass** hydriertes Carbonyleisen eingesetzt wird.

7. Haftklebemasse nach einem der vorangehenden Ansprüche, **dadurch gekennzeichnet, dass** das Carbonyleisen einen Reinheitsgrad von mindestens 97 %, bevorzugt von mindestens 99 % aufweist.

8. Haftklebeband, ein- oder beidseitig ausgerüstet mit einer Schicht einer Haftklebemasse nach einem der vorangehenden Ansprüche.

**9.** Verwendung einer Haftklebemasse nach einem der Ansprüche 1 bis 7 oder eines Haftklebebandes nach Anspruch 8 zur Verklebung elektronischer Bauteile, insbesondere im Mobilfunktelefonbereich.

## Claims

**1.** Pressure-sensitive adhesive based on one or more base polymers, the glass transition temperature $T_g$ of the one base polymer, or, where there are two or more base polymers present, the glass transition temperature $T_g$ of the base polymer mixture, measured according to DIN 53765, being not above -30°C, **characterized in that** at least 30 pph of carbonyliron, based on the base polymers, has been added.

**2.** Pressure-sensitive adhesive according to Claim 1, **characterized in that** at least one of the base polymers is an acrylate polymer and/or a methacrylate polymer.

**3.** Pressure-sensitive adhesive according to either of the preceding claims, **characterized in that** at least 35 pph of carbonyliron, based on the base polymers, has been added.

**4.** Pressure-sensitive adhesive according to any of the preceding claims, **characterized in that** not more than 60 pph of carbonyliron, based on the base polymers, has been added.

**5.** Pressure-sensitive adhesive according to any of the preceding claims, **characterized in that** carbonyliron having a particle size of 0.1 to 10 μm, more particularly of 1 to 8 μm, is used.

**6.** Pressure-sensitive adhesive according to any of the preceding claims, **characterized in that** hydrogenated carbonyliron is used.

**7.** Pressure-sensitive adhesive according to any of the preceding claims, **characterized in that** the carbonyliron has a purity of at least 97%, preferably of at least 99%.

**8.** Pressure-sensitive adhesive tape, furnished on one or both sides with a layer of a pressure-sensitive adhesive according to any of the preceding claims.

**9.** Use of a pressure-sensitive adhesive according to any of Claims 1 to 7 or a pressure-sensitive adhesive tape according to Claim 8 for adhesively bonding electronic components, more particularly in the mobile telephone sector.

## Revendications

**1.** Masse autoadhésive à base d'un ou de plusieurs polymères de base, la température de transition vitreuse $T_G$ dudit un polymère de base, ou pour autant que plusieurs polymères de base soient présents, la température de transition vitreuse $T_G$ du mélange de polymères de base, mesurée selon la norme DIN 53765 n'étant pas supérieure à -30°C, **caractérisée en ce qu'**au moins 30 pph (parties par cent parties de caoutchouc), par rapport aux polymères de base, de fer-carbonyle sont ajoutés.

**2.** Masse autoadhésive selon la revendication 1, **caractérisée en ce qu'**au moins un des polymères de base est un polymère d'acrylate et/ou de méthacrylate.

**3.** Masse autoadhésive selon l'une quelconque des revendications précédentes, **caractérisée en ce qu'**au moins 35 pph, par rapport aux polymères de base, de fer-carbonyle sont ajoutés.

**4.** Masse autoadhésive selon l'une quelconque des revendications précédentes, **caractérisée en ce que** pas plus de 60 pph, par rapport aux polymères de base, de fer-carbonyle sont ajoutés.

**5.** Masse autoadhésive selon l'une quelconque des revendications précédentes, **caractérisée en ce qu'**on ajoute du fer-carbonyle présentant une grosseur de particules de 0,1 à 10 μm, en particulier de 1 à 8 μm.

**6.** Masse autoadhésive selon l'une quelconque des revendications précédentes, **caractérisée en ce qu'**on utilise du fer-carbonyle hydrogéné.

7. Masse autoadhésive selon l'une quelconque des revendications précédentes, **caractérisée en ce que** le fer-carbonyle présente un degré de pureté d'au moins 97%, de préférence d'au moins 99%.

8. Bande autoadhésive apprêtée sur une ou deux faces avec une couche d'une masse autoadhésive selon l'une quelconque des revendications précédentes.

9. Utilisation d'une masse autoadhésive selon l'une quelconque des revendications 1 à 7 ou d'une bande autoadhésive selon la revendication 8 pour le collage de pièces électroniques, en particulier dans le domaine des téléphones mobiles.

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- US 7135643 B
- US 5645886 A
- EP 1978069 A
- DE 102004044086


### In der Beschreibung aufgeführte Nicht-Patentliteratur


- **Donatas Satas.** Handbook of Pressure Sensitive Adhesive Technology. van Nostrand, 1989
- **T.G. Fox.** Analogie zur Fox-Gleichung. *Bull. Am. Phys. Soc.,* 1956, vol. 1, 123
- Handbook of Pressure Sensitive Adhesive Technology. van Nostrand, 1989
- **Donatas Sata.** Handbook of Pressure Sensitive Adhesive Technology. van Nostrand, 1989
- **T.G. Fox.** *Bull. Am. Phys. Soc.,* 1956, vol. 1, 123